# EUROPÄISCHE PATENTSCHRIFT

(11) **EP 1 979 632 B1**
(45) Veröffentlichungstag und Bekanntmachung des Hinweises auf die Patenterteilung: **12.10.2011**
(21) Anmeldenummer: 07703865.1
(22) Anmeldetag: 15.01.2007
(51) Int. Cl.: F16B 33/00, F16B 35/04

(54) **SCHRAUBE ZUM EINSATZ IN THERMISCH BELASTETEN UMGEBUNGEN**
SCREW FOR USE IN THERMALLY LOADED SURROUNDINGS
VIS DESTINEE A ETRE UTILISEE DANS DES ENVIRONNEMENTS THERMIQUEMENT SOLLICITES

(30) Priorität: 02.02.2006 EP 06002174
(43) Veröffentlichungstag der Anmeldung: 15.10.2008
(73) Patentinhaber: SIEMENS AKTIENGESELLSCHAFT, 80333 München (DE)
(72) Erfinder: THIEMANN, Thomas, 45659 Recklinghausen (DE)
(86) Internationale Anmeldenummer: PCT/EP2007/050349
(87) Internationale Veröffentlichungsnummer: WO 2007/088098

(56) Entgegenhaltungen:
- EP-A- 1 605 209
- US-A1- 2004 093 872

## Beschreibung

Die Erfindung betrifft eine Schraube mit einem unteren und einem oberen Ende zum Verbinden eines ersten Bauteils mit einem zweiten Bauteil, wobei die Schraube einen Hohlraum entlang ihrer Längsrichtung umfasst. Des Weiteren betrifft die Erfindung eine Schraube mit einem unteren und einem oberen Ende zum Verbinden eines ersten Bauteils und einem zweiten Bauteil, wobei die Schraube eine Bohrung umfasst.

Schraubverbindungen werden in vielen Bereichen des Maschinenbaus eingesetzt. Besonders beim Bau von Strömungsmaschinen spielen Schraubverbindungen eine besonders wichtige Rolle, da die auftretenden Drücke und Kräfte hoch sind, bei vergleichsweise hohen Temperaturen.

Unter der Sammelbezeichnung Strömungsmaschinen werden Wasserturbinen, Dampf- und Gasturbinen, Windräder, Kreiselpumpen und Kreiselverdichter sowie Propeller zusammengefasst. Allen diesen Maschinen ist gemeinsam, dass sie dem Zweck dienen einem Fluid Energie zu entziehen, um damit eine andere Maschine anzutreiben oder umgekehrt einem Fluid Energie zuzuführen, um dessen Druck zu erhöhen.

In den vorgenannten Gebieten werden Schraubverbindungen eingesetzt, die sehr hohen Kräften ausgesetzt sind. In vielen Fällen müssen die Schrauben neben den hohen Kräften auch hohen thermischen Belastungen standhalten. Besonders im Dampf- oder Gasturbinenbau sind Schraubverbindungen zum Teil sehr hohen Temperaturen aufgesetzt.

Die im Dampfturbinenbau eingesetzten Dampfventile sind häufig mit Schraubverbindungen ausgeführt, die ebenfalls hohen thermischen Belastungen ausgesetzt sind. Es sind Schrauben für Schraubverbindungen bekannt, die aus ferritischen Schraubenwerkstoffen hergestellt sind. Da die Materialeigenschaften wie die Festigkeit von ferritischen Werkstoffen sich mit zunehmender Temperatur ändern, werden diese Werkstoffe nur bis zu einer oberen Grenztemperatur eingesetzt.

Es werden Bemühungen unternommen, den Einsatzbereich bewährter Schraubverbindungen durch intensive lokale Kühlung zu erweitern. Aus dem Stand der Technik ist es bekannt, Schrauben mit Bohrungen zu versehen, wobei durch die Bohrung ein Kühlmedium durchströmt und die Schraube dadurch abgekühlt wird. Bei diesem Kühlprinzip muss das Kühlmedium durch Geräte über Kreislaufsysteme zur Schraube geführt werden. Der Aufbau dieses Kühlkreislaufs ist aufwendig, da das Kühlmedium durch Apparate, wie zum Beispiel Pumpen, Filter, Rohrleitungen o. ä. geführt werden muss.

Eine weitere Möglichkeit Schrauben derart zu modifizieren, dass sie für hohe thermische Belastungen einsetzbar sind, besteht darin, Materialien einzusetzen, die für hohe Temperaturen geeignet sind. In Frage kämen hier beispielsweise Materialien aus dem Bereich der Nickelbasislegierungen. Allerdings ist die Auswahl und der Einsatz von neuen Materialien zeitaufwendig und kostenintensiv. Häufig weisen diese Materialien auch ungünstige Eigenschaften auf, wie beispielsweise "negatives Kriechen".

Gemäß dem Stand der Technik ist es bekannt, Schraubverbindungen mit entsprechenden Sonderlegierungen auszubilden. Diese Schraubverbindungen können dadurch bei hohen Temperaturen eingesetzt werden. Allerdings sind die Kosten dieser Legierungen vergleichsweise hoch. Darüber hinaus ist die Herstellung der Schrauben aufwendig, was zu einer geringen Verfügbarkeit führt.

Falls Schrauben aus Nickel-Basislegierungen eingesetzt werden, sind aufgrund des ungünstigen thermischen Dehnungsverhaltens in der Regel Dehnhülsen erforderlich. Die Auslegung der Dehnhülsen erfordert die genaue Kenntnis der lokalen Temperaturverhältnisse der Schraube.

Die US 2004/093872 A1 offenbart eine Schraube mit einem Kopf und einem Schaft, der eine Einströmöffnung aufweist sowie eine Ausströmöffnung aufweisenden Kühlmittelkanal, welcher nicht den gesamten Kopf und Schaft axial durchdringt.

Es ist Aufgabe der Erfindung, eine Schraube anzugeben, die bei hohen thermischen Belastungen eingesetzt werden kann.

Die Aufgabe wird gelöst durch eine Schraube mit einem unteren und einem oberen Ende zum Verbinden eines ersten Bauteils mit einem zweiten Bauteil, wobei die Schraube einen Hohlraum entlang ihrer Längsrichtung umfasst. Der Hohlraum kann am unteren Ende einen Boden zum Bilden eines becherartigen Hohlraums aufweisen, wobei der Hohlraum zum Befüllen mit einem Medium ausgebildet ist und ein Teil der Wandung des Hohlraums über das obere Ende hinausragt. Der Hohlraum kann auch durchgängig sein, so dass ein mit einem Medium gefülltes, spezielles Rohr eingesteckt werden kann.

Die Erfindung nutzt den Effekt des Wärmerohr-Prinzips aus. Das Wärmerohr-Prinzip beruht thermodynamisch auf der Verdampfung eines Mediums am heißen Ende und der Kondensation des Mediums an einem kalten Ende innerhalb eines länglich ausgebildeten Hohlraums. Schon bei geringen Temperaturunterschieden zwischen den Enden des in sich geschlossenen Hohlraums werden relativ große Wärmemengen geleitet. Das Prinzip des Wärmerohres ist folgender: Am wärmeren Rohrende verdampft die Flüssigkeit und nimmt dabei Verdampfungswärme auf. Am kühleren Ende kondensiert sie und gibt die Verdampfungswärme ab. Das Prinzip ist auch bei horizontaler Anordnung anwendbar. In diesem Fall ist die Wand mit Kapillaren auszubilden. Durch die Kapillarwirkung der Innenwandung fließt das Kondensat wieder zum wärmeren Rohrende zurück. Aufgrund der hohen Verdampfungsenthalpie ermöglichen Wärmerohre einen um Größenordnungen besseren Wärmeübergang als beispielsweise Stahl.

Eine Schraube in einer thermisch belasteten Umgebung weist üblicher Weise einen Temperaturgradienten auf. Beispielsweise kann das untere Ende kälter als das obere Ende sein. Durch das Prinzip des Wärmerohres wird die Wärme des wärmeren unteren Endes zum kühleren oberen Ende geleitet und dort abgeführt. Durch diese Wärmeübertragung vom unteren zum oberen Ende wird die Schraube insgesamt gekühlt. Dadurch kann die Schraube in thermisch belastete Umgebungen eingesetzt werden. Die Schraube kann demnach bei höheren Temperaturen eingesetzt werden, da die auf die Schraube am unteren Ende übertragene Wärme schnell am oberen Ende abgeführt werden kann.

Erfindungsgemäß ragt ein Teil der Wandung des Hohlraums über das obere Ende hinaus. Mit der Verlängerung des Wärmerohres oberhalb des oberen Endes der Schraube wird der Effekt erreicht, dass die vom unteren heißen Ende aufgenommene Wärme in einen besonders einfach kühlbaren Bereich des Wärmerohres geleitet werden kann. Diese Kühlung muss nicht aktiv erfolgen, die Kühlung kann allein durch die geometrische Entfernung zu den heißen Bauteilen auf Grund des Temperaturunterschieds zur Umgebung erfolgen. Wenn sozusagen ein Teil der Wandung des Hohlraums über das obere Ende hinausragt, dann erfährt dieser Teil eine andere, geringere Temperatur als der Rest des Wärmerohres, wodurch eine bessere Kühlwirkung erreicht werden kann.

In einer weiteren vorteilhaften Weiterbildung ist die Wandung, die über das obere Ende hinaus ragt, wenigstens so lang, wie der in der Schraube befindliche Teil der Wandung. Es hat sich gezeigt, dass diese geometrische Ausgestaltung, bei der der aus der Schraube ragende Teil mindestens so lang ist wie der in der Schraube befindliche Teil, eine besonders effektive Kühlwirkung zeigt.

In einer vorteilhaften Weiterbildung ist der Hohlraum als Bohrung ausgeführt. Das Prinzip des Wärmerohres ist in Hohlräumen, die nicht als Rohr, d. h. mit einem kreisförmigen Querschnitt ausgebildet sind, gültig. Wenn der Querschnitt des Wärmerohres dreieckig, viereckig oder eine ähnliche geometrische Form annimmt, zeigen diese derart ausgebildeten Wärmerohre den gleichen physikalischen Effekt wie Wärmerohre mit einem kreisförmigen Querschnitt. Eine Bohrung ist allerdings vergleichsweise einfach gegenüber einem dreieckigen, viereckigen oder ähnlichen Querschnitt auszuführen. Dadurch erwirkt man den Vorteil, dass die Schraube mit einem als Bohrung ausgeführten Hohlraum kostengünstig ausgeführt werden kann. Häufig weisen die nach dem Stand der Technik eingesetzten Schrauben bereits eine definierte Bohrung auf, wenn sie als Dehnschrauben eingesetzt werden.

Die Aufgabe wird ebenso gelöst durch eine Schraube mit einem unteren und einem oberen Ende zum Verbinden eines ersten Bauteil mit einem zweiten Bauteil, wobei die Schraube eine Bohrung umfasst, wobei in der Bohrung ein Wärmerohr angeordnet ist, wobei das Wärmerohr zum Befüllen mit einem Medium ausgebildet ist.

Auch hier wird das Prinzip des Wärmerohres ausgenutzt. Erfindungsgemäß wird eine Schraube vorgestellt, bei der das Wärmerohr in einer Bohrung der Schraube angeordnet werden kann. Die Kühlwirkung erfolgt nach dem gleichen physikalischen Prinzip wie oben beschrieben. Die mit einem Wärmerohr in der Bohrung ausgebildete Schraube ist allerdings vergleichsweise einfacher herzustellen. Dadurch werden Kosten reduziert. Die Schraube umfasst in dieser Ausführungsform zumindest zwei Bestandteile. Zum einen wäre dies eine mit einer Bohrung versehene Schraube und ein Wärmerohr, das in die Bohrung eingeführt wird. Das Wärmerohr kann hierbei aus demselben Material wie die Schraube bestehen, es können aber auch unterschiedliche Materialien für das Wärmerohr und für die Schraube eingesetzt werden.

In einer weiteren vorteilhaften Weiterbildung wird als Medium flüssiges Natrium oder flüssiges Kalium verwendet. Gerade im Dampfturbinenbau werden Temperaturen von über 500°C erreicht. Flüssiges Natrium oder flüssiges Kalium ist daher ein geeigneter Kandidat für diesen Temperaturbereich.

Ausführungsbeispiele der Erfindung werden nachfolgend unter Bezugnahme auf die Zeichnungen näher beschrieben. Dabei haben mit demselben Bezugszeichen versehene Komponenten die gleiche Funktionsweise.

Dabei zeigen:
- Figur 1: eine perspektivische Darstellung eines Dampfventils für eine Dampfturbine,
- Figur 2: eine Draufsicht auf das Dampfventil gemäß Figur 1,
- Figur 3: eine Schnittdarstellung einer Schraubverbindung,
- Figur 4: eine Schnittdarstellung einer Schraubverbindung in alternativer Ausführungsform,
- Figur 5: eine Schnittdarstellung einer Schraubverbindung in alternativer Ausführungsform.

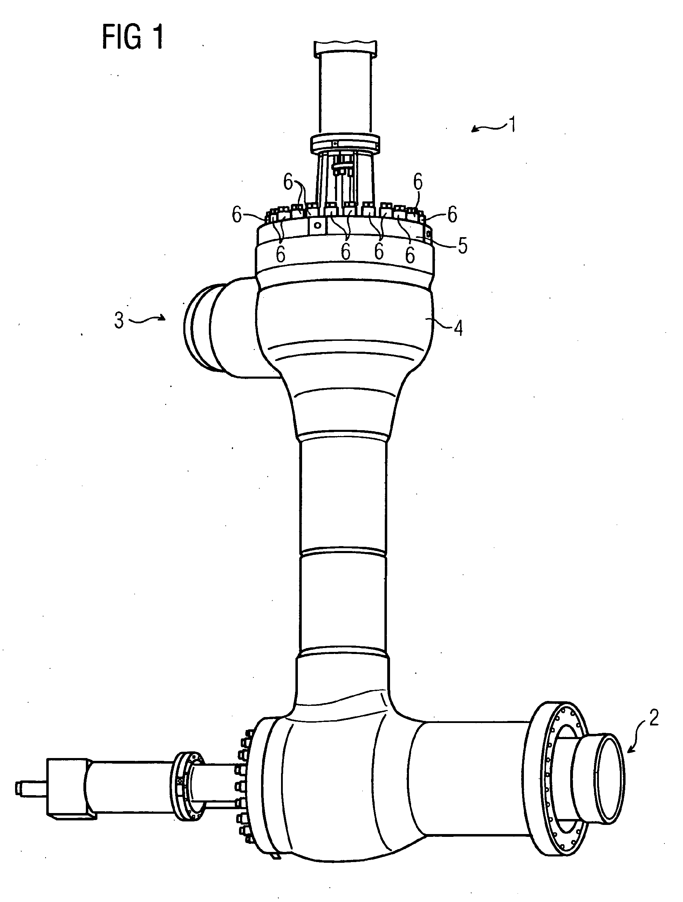

In der Figur 1 wird ein Dampfventil 1 in perspektivischer Darstellung gezeigt. Wesentliche Merkmale des Dampfventils 1 ist der Einströmbereich 3, wo Dampf mit sehr hohen Temperaturen einströmt. Dieser Dampf wird durch in der Figur 1 nicht gezeigte Kanäle zum Ausströmbereich 2 geführt. Das Dampfventil 1 ist im wesentlichen zylinderförmig ausgeführt und umfasst ein erstes Bauteil 4 und ein zweites Bauteil 5. Das zweite Bauteil 5 ist als Deckel ausgeführt. Das erste Bauteil 4 ist zylinderförmig ausgeführt. Das erste Bauteil 4 wird mittels Schrauben 6 mit dem zweiten Bauteil 5 verbunden. Da insbesondere im Dampfturbinenbau die Dampfventile 1 mit sehr hohen Drücken aufweisenden Wasserdampf beaufschlagt werden, sind um den hohen Kräften Stand zu halten, mehrere Schrauben 6 zum Verbinden des ersten Bauteils mit dem zweiten Bauteil 5 vorgesehen.

Die Erfindung ist nicht beschränkt auf die Verbindung eines ersten Bauteils 4 und eines zweiten Bauteils 5 eines Dampfventils. Das erste Bauteil 4 oder das zweite Bauteil 5 könnte ebenso das Oberteil und das Unterteil eines Innengehäuses einer Dampfturbine sein. Das erste Bauteil 4 und das zweite Bauteil 5 könnten auch als Außengehäuse einer Dampfturbine ausgebildet sein.

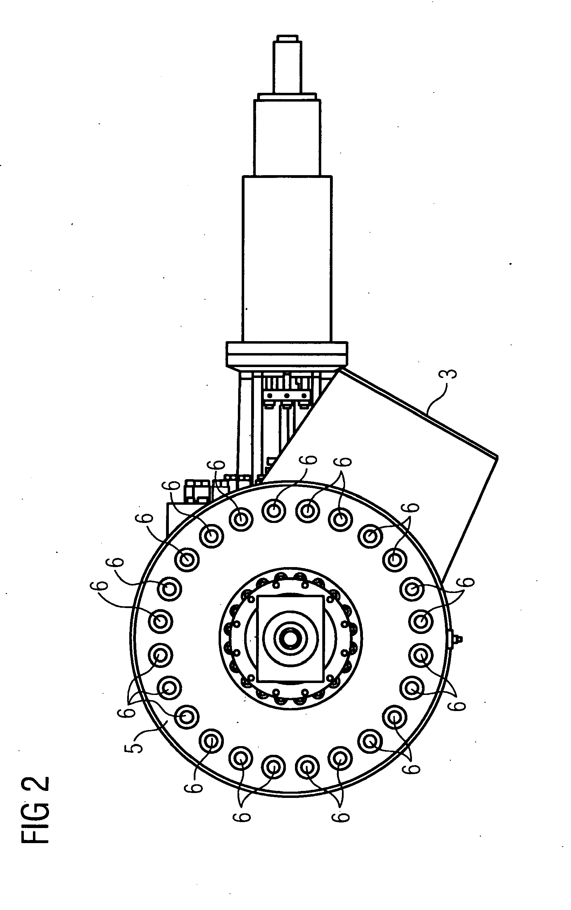

In der Figur 2 ist eine Draufsicht auf das Dampfventil gemäß Figur 1 zu sehen. Der Deckel 5 als Ausführungsform des zweiten Bauteils ist kreisförmig ausgebildet und umfasst mehrere Bohrungen, in die die Schrauben 6 eingeführt werden. Im ersten Bauteil 4 sind Gewinde angeordnet die fluchtend zu den Bohrungen ausgebildet sind.

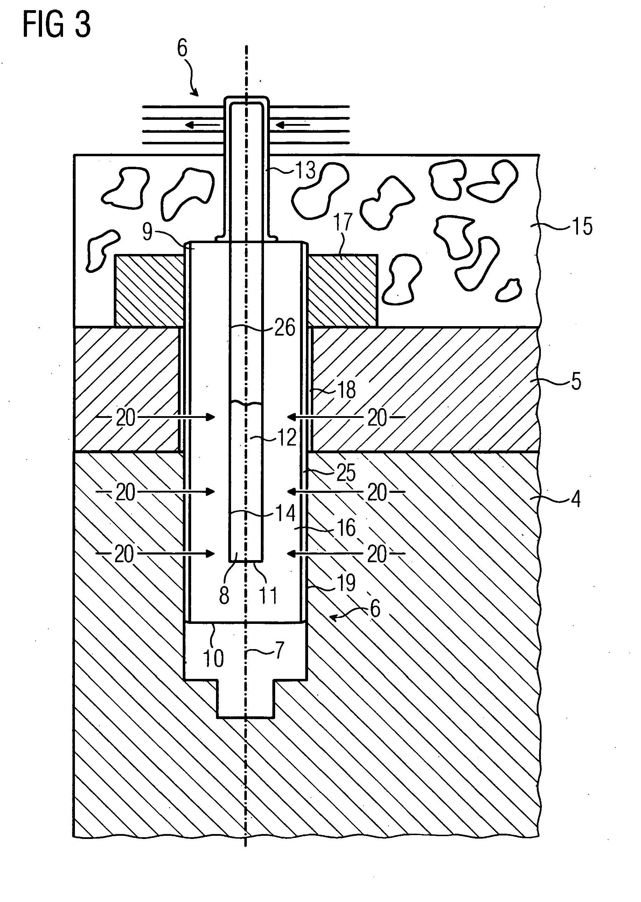

In der Figur 3 ist eine Schnittdarstellung durch eine Schraube 6 zu sehen. Die Schraube 6 verbindet das erste Bauteil 4 mit dem zweiten Bauteil 5. Die Schraube 6 ist in ihrer Längsrichtung 7 mit einem Hohlraum 8 versehen. Die Schraube 6 weist ein oberes Ende 9 und ein unteres Ende 10 auf. Der Hohlraum 8 weist am unteren Ende 10 einen Boden 11 zum Bilden eines becherartigen Hohlraums 8 auf. Der becherartige Hohlraum 8 ist zum Befüllen mit einem Medium 12 ausgebildet. Am oberen Ende 9 der Schraube ragt ein Teil der Wandung 13 des Hohlraums 8 über das obere Ende hinaus. Die Wandung 13 kann als Hülse ausgebildet sein, die so gestaltet ist, dass der Raum über dem oberen Ende 9 der Schraube geschlossen ausgeführt ist. Der Hohlraum 8 kann als Bohrung ausgeführt sein. Andere Ausführungsformen wie z. B. ein dreieckiger oder ein viereckiger Querschnitt sind möglich.

Die Wandung 13 des Hohlraums 8 kann mit Kapillaren 26 entlang der Länge ausgestattet sein, was dazu führt, dass das Kühlmedium auch bei nicht vertikaler Einbaulage zum Boden 11 gefördert wird.

Die Wandung 13, die über das obere Ende 9 hinausragt, kann genauso lang sein, wie der in der Schraube 6 befindliche Teil der Wandung 14, aber auch länger oder kürzer.

Der Hohlraum 8 ist geschlossen ausgeführt.

Die Schraube 6 kann als Gewindestange 16 und mit einer am oberen Ende 9 befindlichen Mutter 17 ausgebildet sein. Das zweite Bauteil 5 umfasst eine Bohrung 18. Im ersten Bauteil 4 ist eine weitere Bohrung 19 mit einem Gewinde fluchtend zur Bohrung 18 im zweiten Bauteil angeordnet. Zunächst wird die Gewindestange 16 in die Bohrung 19 mit dem Gewinde 25 gedreht. Anschließend wird die Mutter 17 am oberen Ende 9 der Gewindestange 16 angebracht und mit einem hohen Drehmoment verschraubt. Hierbei ist auch ein Vorheizen der Schraube möglich, um eine definierte Anzugskraft zu erzeugen.

Das im Hohlraum 8 befindliche Medium 12 kann beispielsweise flüssiges Natrium oder flüssiges Kalium sein. Im Betrieb strömt Wärme entlang eines Wärmestroms 20. Der untere Teil 10 der Schraube erwärmt sich hierbei, was dazu führt, dass das Medium 12 derart heiß werden kann, dass es verdampft und sich an der Wandung 13 beim oberen Ende wieder niederschlägt und kondensiert. Dabei wird Wärme abgegeben, die von der Umgebung oder einem anderen äußeren Kühlmedium weggeführt wird.

Um die Schraube 6 kann eine Isolation 15 zur thermischen Isolierung des Bauteils noch zusätzlich angeordnet werden. In diesem Fall muss das Rohr mindestens so lang sein, dass die Wandung 13 mit dem zu kühlenden Ende des Rohres außerhalb der Isolierung liegt.

Für die Schraube können auf Grund der Kühlung Werkstoffe aus niederwertigeren Werkstoffklassen eingesetzt werden. Im Hochtemperaturbereich zum Beispiel hochchromhaltige Stähle anstelle von Nickelbasislegierungen (z.B. X19CrMoNbVN11-1 anstelle Nimonic). Bei niedrigeren Temperaturen können kostengünstigere und besser verfügbare 1%-Chromstähle anstelle von hochchromhaltigen Stählen eingesetzt werden (z.B. 21CrMoV5-7 anstelle von X19CrMoNbVN11-1).

Hinsichtlich der Abmaße ist es vorteilhaft, wenn die Länge der Schraube 150 bis 800 mm aufweist und ein Gewinde gemäß DIN zwischen M56 und M180 aufweist.

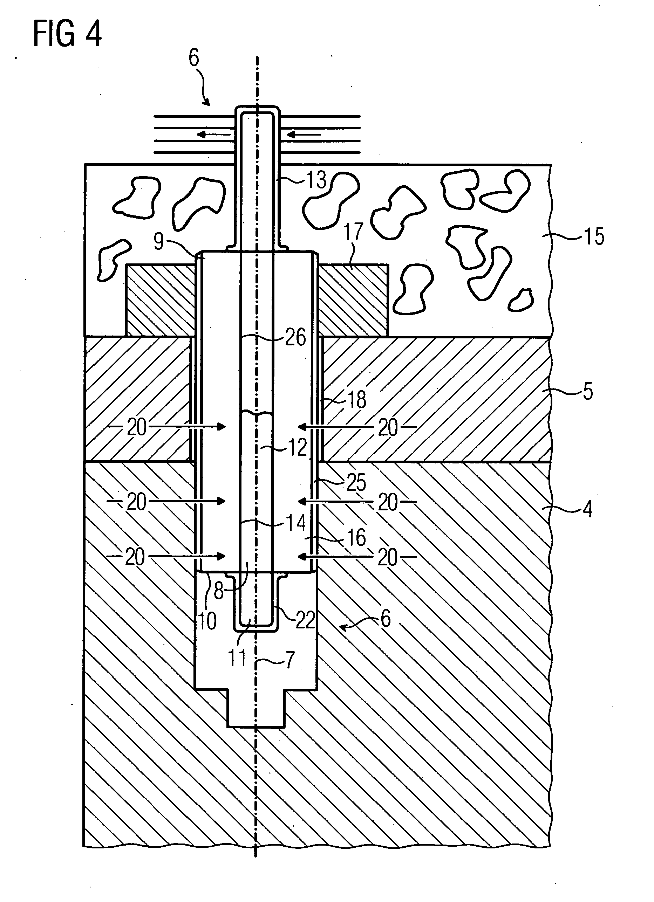

In der Figur 4 ist eine alternative Ausführungsform der Schraube 6 dargestellt. Der Unterschied der in Figur 4 dargestellten Schraube 6 zu der in Figur 3 dargestellten Schraube 6 ist der, dass der Boden 11 am unteren Ende 10 der Schraube durch eine becherartige Hülse 22 gebildet ist. Der Hohlraum 8 ist dadurch als durchgängige Bohrung vom oberen Ende 9 bis zum unteren Ende 10 der Schraube 6 ausgeführt. Die Hülse 22 mit dem becherartigen Boden 11 wird am unteren Ende 10 der Schraube angeschweißt, genietet oder gelötet. Andere Verbindungsmöglichkeiten sind denkbar. Die Funktionsweise und die übrigen Bestandteile der Schraube sind mit denen in Figur 3 identisch. Daher wird auf die Erläuterungen zur Figur 3 an dieser Stelle verwiesen.

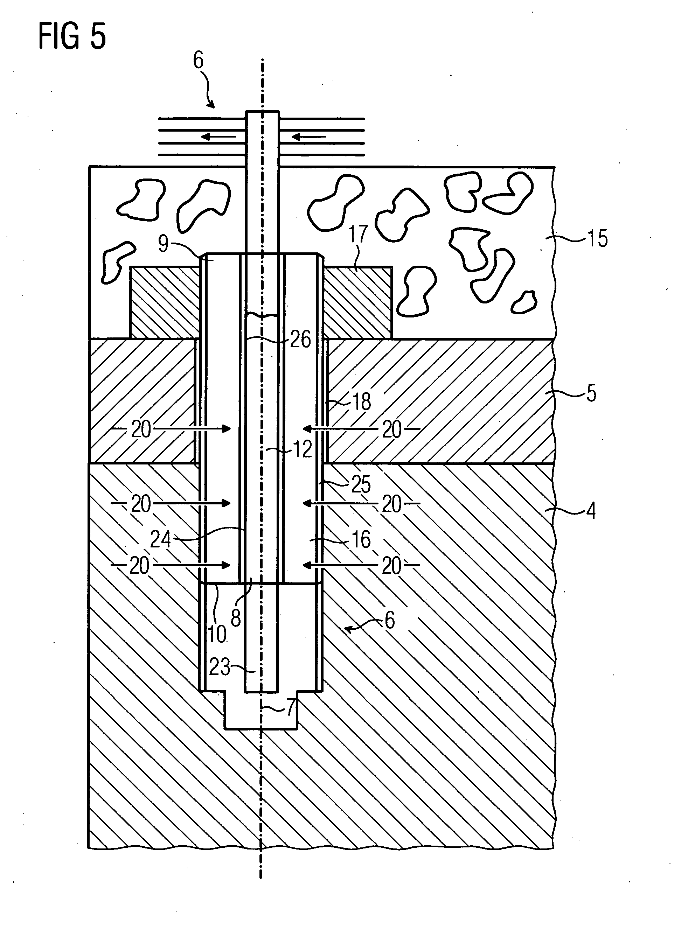

In der Figur 5 ist eine weitere alternative Ausführungsform der Schraube 6 dargestellt. Die Schraube 6 ist derart ausgebildet, dass ein geschlossenes Wärmerohr 23 in eine Bohrung 24, die einen geringfügig größeren Durchmesser hat als der Durchmesser des Wärmerohres 23, angeordnet ist. Das Wärmerohr 23 ist länger als die Gewindestange 16 und ragt über das obere Ende 9 und das untere Ende 10 hinaus. Das Wärmerohr 23 muss nicht unbedingt am unteren Ende 10 hinaus ragen. Das Wärmerohr kann am unteren Ende 10 bündig mit der Gewindestange 16 abschließen. Die Bohrung muss nicht durchgängig sein, sondern kann bis zum unteren Ende 10 gehen. Ansonsten ist die Wirkungsweise der Schraube 6 nahezu identisch mit der Wirkungsweise der Schraube 6 wie in den Figuren 3 und 4 beschrieben. Daher wird auf die Erläuterungen zu den Figuren 3 und 4 an dieser Stelle verwiesen.

## Patentansprüche

1. Schraube (6) mit einem unteren (10) und einem oberen Ende (9) zum Verbinden eines ersten Bauteils (4) mit einem zweiten Bauteil (5),
wobei die Schraube (6) einen Hohlraum (8) entlang ihrer Längsrichtung (7) umfasst, wobei
der Hohlraum (8) am unteren Ende (10) einen Boden (11) zum Bilden eines becherartigen Hohlraums (8) aufweist,
wobei der Hohlraum (8) zum Befüllen mit einem Medium (12) ausgebildet ist,
**dadurch gekennzeichnet, dass**
ein Teil der Wandung (13) des Hohlraums (8) über das obere Ende (9) hinausragt.

2. Schraube (6) nach Anspruch 1,
bei der der Hohlraum (8) als Bohrung ausgeführt ist.

3. Schraube (6) nach Anspruch 2,
bei der die Wandung (13), die über das obere Ende (9) hinausragt, wenigstens so lang ist wie der in der Schraube (6) befindliche Teil der Wandung (14).

4. Schraube (6) nach Anspruch 1, 2 oder 3,
bei der der Hohlraum (8) geschlossen ist.

5. Schraube (6) mit einem unteren (10) und einem oberen Ende (9) zum Verbinden eines ersten Bauteils (4) mit einem zweiten Bauteil (5),
wobei die Schraube (6) eine Bohrung (24) umfasst, **dadurch gekennzeichnet, dass**
in der Bohrung (24) ein Wärmerohr (23) angeordnet ist, wobei das Wärmerohr (23) zum Befüllen mit einem Medium (12) ausgebildet ist.

6. Schraube (6) nach Anspruch 5,
bei der die Bohrung (24) Kapillaren (26) aufweist.

7. Schraube (6) nach Anspruch 6,
bei der die Bohrung (24) vom oberen (9) bis zum unteren Ende (10) durchgängig ausgebildet ist und das Wärmerohr (23) über das untere Ende (10) hinausragt.

8. Schraube (6) nach Anspruch 5, 6 oder 7,
bei der das Wärmerohr (23) über das obere Ende (9) hinausragt.

9. Schraube (6) nach einem der vorhergehenden Ansprüche, die eine Gewindestange (16) und eine Mutter (17) umfasst.

10. Schraube (6) nach einem der vorhergehenden Ansprüche, mit flüssigem Natrium oder flüssigem Kalium als Medium (12).

11. Schraube (6) nach einem der vorhergehenden Ansprüche, die aus dem Material X19 CrMoVN11-1 oder 21CrMoV5-7 oder Nimonic gefertigt ist.

12. Schraube (6) nach einem der vorhergehenden Ansprüche, die eine Länge von 150 bis 800 mm aufweist.

13. Schraube (6) nach einem der vorhergehenden Ansprüche, mit einem Gewinde gemäß DIN zwischen M56 und M180.

## Claims

1. Screw (6) with a lower (10) and an upper end (9) for connecting a first component (4) to a second component (5),
wherein the screw (6) along its longitudinal direction (7) comprises a cavity (8),
wherein the cavity (8) has a bottom (11) at the lower end (10) for forming a beaker-like cavity (8),
wherein the cavity (8) is formed for filling with a medium (12),
**characterized in that**
a part of the wall (13) of the cavity (8) projects out beyond the upper end (9).

2. Screw (6) according to claim 1,
in which the cavity (8) is constructed as a bore.

3. Screw (6) according to Claim 2,
in which the wall (13) which projects out beyond the upper end (9) is at least as long as the part of the wall (14) which is in the screw (6).

4. Screw (6) according to Claims 1, 2 or 3,
in which the cavity (8) is closed.

5. Screw (6) with a lower (10) and an upper end (9) for connecting a first component (4) to a second component (5),
wherein the screw (6) comprises a bore (24), **characterized in that**
a heat pipe (23) is arranged in the bore (24),
wherein the heat pipe (23) is formed for filling with a medium (12).

6. Screw (6) according to Claim 5,
in which the bore (24) has capillaries (26).

7. Screw (6) according to Claim 6,
in which the bore (24) is formed continuous from the upper (9) to the lower end (10) and the heat pipe (23) projects out beyond the lower end (10).

8. Screw (6) according to Claims 5, 6 or 7,
in which the heat pipe (23) projects out beyond the upper end (9).

9. Screw (6) according to one of the preceding claims,
which comprises a threaded rod (16) and a nut (17).

10. Screw (6) according to one of the preceding claims,
with liquid sodium or liquid potassium as medium (12).

11. Screw (6) according to one of the preceding claims,
which is manufactured from the material X19 CrMoVN11-1 or 21CrMoV5-7 or nimonic.

12. Screw (6) according to one of the preceding claims,
which features a length of 150 to 800 mm.

13. Screw (6) according to one of the preceding claims,
with a thread according to DIN of between M56 and M180.

## Revendications

1. Vis (6) ayant une extrémité ( 10 ) inférieure et une extrémité ( 9 ) supérieure pour relier un premier élément ( 4 ) à un deuxième élément ( 5 ),
dans laquelle la vis ( 6) comprend un espace ( 8 ) vide le long de sa direction ( 7 ) longitudinale, dans laquelle l'espace ( 8 ) vide a, à l'extrémité ( 10 ) inférieure, un fond ( 11 ) pour former un espace ( 8 ) vide en forme de gobelet,
l'espace ( 8 ) vide étant constitué pour être empli d'un milieu ( 12 ),
**caractérisée en ce que**
une partie de la paroi (13) de l'espace (8) vide dépasse de l'extrémité ( 9 ) supérieure.

2. Vis ( 6 ) suivant la revendication 1,
dans laquelle l'espace ( 8 ) vide est réalisé sous la forme d'un alésage.

3. Vis ( 6 ) suivant la revendication 2,
dans laquelle la paroi ( 13 ), qui dépasse de l'extrémité ( 9) supérieure, est au moins aussi longue que la partie de la paroi ( 14 ), qui se trouve dans la vis ( 6 ).

4. Vis ( 6 ) suivant la revendication 1, 2 ou 3,
dans laquelle l'espace ( 8 ) vide est fermé.

5. Vis (6) ayant une extrémité ( 10 ) inférieure et une extrémité ( 9 ) supérieure pour relier un premier élément ( 4 ) à un deuxième élément ( 5 ),
dans laquelle la vis comprend un alésage ( 24 ),
**caractérisée en ce que**
dans l'alésage ( 24 ) est monté un caloduc ( 23 ), le caloduc ( 23 ) étant constitué pour être empli d'un milieu ( 12).

6. Vis ( 6 ) suivant la revendication 5,
dans laquelle l'alésage (24) comporte des tubes (26) capillaires.

7. Vis ( 6 ) suivant la revendication 6,
dans laquelle l'alésage ( 24 ) est constitué de manière continue de l'extrémité ( 9 ) supérieure à l'extrémité ( 10 ) inférieure et le caloduc (23) dépasse de l'extrémité ( 10 ) inférieure.

8. Vis ( 6 ) suivant la revendication 5, 6 ou 7,
dans laquelle le caloduc ( 23 ) dépasse de l'extrémité ( 9 ) supérieure.

9. Vis ( 6 ) suivant l'une des revendications précédentes, qui comprend une tige ( 16 ) filetée et un écrou ( 17 ).

10. Vis ( 6 ) suivant l'une des revendications précédentes, comprenant du sodium liquide ou du potassium liquide comme milieu ( 12 ).

11. Vis ( 6 ) suivant l'une des revendications précédentes, qui est en le matériau X19 CrMoVN11-1 ou 21CrMoV5-7 ou nimonique.

12. Vis ( 6 ) suivant l'une des revendications précédentes, qui a une longueur de 150 à 800 mm.

13. Vis ( 6 ) suivant l'une des revendications précédentes, ayant un filetage suivant DIN compris entre M56 et M180.
